# EUROPÄISCHE PATENTANMELDUNG

(11) **EP 2 131 088 A2**
(43) Veröffentlichungstag der Anmeldung: **09.12.2009**
(21) Anmeldenummer: 09007318.0
(22) Anmeldetag: 02.06.2009
(51) Int. Cl.: F16L 27/108, F16L 55/07, F28F 9/26, F28F 17/00

(54) **Entleerungs- oder Entlüftungsvorrichtung für einen Kompensator**

(30) Priorität: 03.06.2008 DE 102008026596
(71) Anmelder: Linde AG, 80331 München (DE)
(72) Erfinder: Conrad, Joachim, 09221 Neukirchen (DE); Degner, Kay, 81545 München (DE)

(57) **Zusammenfassung**

Die Erfindung betrifft eine Entleerungs- oder Entlüftungsvorrichtung für einen Kompensator (15), der einen zentralen Innenraum (17) und eine umlaufende Ausformung (16), insbesondere eine Welle (16) aufweist, die einen Ausformungsinnenraum (25) umgibt. Die Entleerungs- oder Entlüftungsvorrichtung umfasst eine Absaugeinrichtung (50) zum Absaugen eines Fluids aus dem Ausformungsinnenraum (25) sowie eine Verbindungsleitung (30, 47), die eine Strömungsverbindung zwischen dem Ausformungsinnenraum (25) und der Absaugeinrichtung (50) herstellt, wobei die Verbindungsleitung (30, 47) durch den zentralen Innenraum (17) des Kompensators (15) verläuft und durch eine Durchgangsöffnung (40) in einer Wand eines mit dem Kompensator (15) verbundenen Bauteils (19) nach außen führt.

## Beschreibung

Die Erfindung betrifft eine Entleerungs- oder Entlüftungsvorrichtung für einen Kompensator. Zudem betrifft die Erfindung einen Wärmeaustauscher mit einem Kompensator und einer Entleerungs- oder Entlüftungsvorrichtung für den Kompensator.

Kompensatoren werden benötigt, wenn sich aufgrund von Temperatur- oder Druckbeanspruchung miteinander verbundene Anlagenbauteile unterschiedliche stark ausdehnen oder relativ zueinander bewegen. Derartige Unterschiede in der Ausdehnung von Bauteilen können nach dem Stand der Technik durch Kompensatoren abgefangen werden. Kompensatoren dienen als Dehnungs- und Bewegungsausgleicher an Apparaten, wie Wärmeaustauschern, Rohrleitungen, Pumpen, Motoren, Turbinen und Maschinen.

Ein Kompensator ist in der Regel als rohrförmiges Element mit welliger bzw. faltiger Struktur gebildet, das mindestens eine um den Umfang umlaufende Ausformung beispielsweise in Form einer Welle oder einer Falte aufweist. Die Welle kann beispielsweise in Form eines nach innen offenen Ringes ausgebildet sein, der um den Umfang des Kompensators verläuft. Ein Kompensator kann eine einzige Welle oder mehrere Wellen oder Falten aufweisen. Ähnlich einer Ziehharmonika kann der Kompensator aufgrund seiner wellenförmigen oder gefalteten Struktur auseinander gezogen oder zusammengedrückt werden. Kompensatoren können aus elastomeren Werkstoffen, wie Gummi, oder aus Metall gebildet sein. Im Falle einer Ausbildung aus Metall werden Kompensatoren mit einer oder mehreren umlaufenden Ausformungen bzw. Wellen auch als Metallbalgkompensatoren bezeichnet.

Insbesondere bei einer waagrechten Anordnung eines solchen Kompensators umschließen die Wellen bzw. Ausformung/en Räume, in denen sich Flüssigkeit oder Gas sammeln, die nicht durch Schwerkraft entleert werden können. Dies stellt jedoch mitunter ein Sicherheitsrisiko da, wenn die Anlage gewartet werden soll und gefährliche Gase oder Flüssigkeiten in der Ausformung bzw. Welle des Kompensators verbleiben. Zudem ist es wünschenswert, eine Anlage von Zeit zu Zeit vollständig von allen Fluiden zu entleeren, da sich im Betrieb einer Anlage auch Stoffe anreichern können, die sich negativ auf in der Anlage ablaufende Verfahren bzw. Prozesse auswirken können.

Um dieses Problem zu lösen, bestünde die Möglichkeit, in der jeweiligen Welle bzw. Falte des Kompensators eine verschließbare Entleerungs- bzw. Entlüftungsöffnung einzubringen. Dies ist jedoch bei Kompensatoren mit einer Wandstärke von weniger als 2 mm technisch schwierig zu realisieren. Zudem versagen in der Regel Hersteller von Kompensatoren auf mit Bohrungen versehende Kompensatoren jegliche Gewährleistung.

Die Aufgabe der vorliegenden Erfindung ist daher, eine Vorrichtung bereit zu stellen, mit der eine vollständige Restentleerung oder Restentlüftung eines Kompensators ohne ein Verletzen der Kompensatorwandung im Bereich der Welle oder der Falte möglich ist.

Die Aufgabe wird gelöst mit einer Entleerungs- oder Entlüftungsvorrichtung nach Anspruch 1.

Demnach wird eine Entleerungs- oder Entlüftungsvorrichtung für einen Kompensator, bereitgestellt, der einen zentralen, vorzugsweise zylindrischen, Innenraum und zumindest eine umlaufende Ausformung, beispielsweise eine Welle, aufweist, die einen Ausformungsinnenraum umgibt, wobei die Entleerungs- bzw. Entlüftungsvorrichtung aufweist: eine Absaugeinrichtung zum Absaugen eines Fluids aus dem Ausformungsinnenraum sowie eine Verbindungsleitung, die eine Strömungsverbindung zwischen dem Ausformungsinnenraum und der Absaugeinrichtung herstellt, wobei die Verbindungsleitung durch den zentralen Innenraum des Kompensators verläuft und durch eine Durchgangsöffnung, beispielsweise eine Durchgangsbohrung, in einer Wand eines mit dem Kompensator verbundenen Bauteils führt. Vorteil dieser Vorrichtung ist, dass die Verbindungsleitung durch den zentralen Innenraum des Kompensators geführt ist und durch eine Durchgangsöffnung in einem benachbarten Bauteil nach außen verläuft. Es ist daher nicht notwendig, eine Öffnung in den Kompensator selbst einzubringen. Eine Beschädigung des Kompensators durch Einbringen einer Entleerungs- oder Entlüftungsbohrung wird somit vermieden. Damit werden Kerbspannungen in der Kompensatorwandung vermieden, die sich negativ auf das Dehnverhalten des Kompensators auswirken würden. Da die Kompensatorwandung unversehrt ist, bleibt die Gewährleistung des Herstellers für den Kompensator bestehen. Durch Anlegen schon eines geringen Vakuums, welches das Gefälle und den Druckverlust der Verbindungsleitung überwindet, kann das Fluid über die Verbindungsleitung aus dem Ausformungsinnenraum entfernt werden.

Bei dem Fluid, das aus dem Kompensator entfernt werden kann, kann es sich um ein Gas oder eine Flüssigkeit handeln. Weist der Kompensator mehrere Ausformungen, wie Wellen, mit mehreren Ausformungsinnenräumen auf, so muss für jede Ausformung eine Strömungsverbindung zu einer Absaugeinrichtung geschaffen werden. Vorzugsweise umfasst die Absaugeinrichtung eine elektrisch betriebene Pumpe. Generell ist es jedoch auch denkbar, eine Flüssigkeit im Ausformungsinnenraum durch ein Gefälle mithilfe des Saugheberprinzips zu entfernen.

Bei der erfindungsgemäßen Vorrichtung ragt die Verbindungsleitung vorzugsweise in den Ausformungsinnenraum des Kompensators hinein. Dies hat den Vorteil, dass ein im Ausformungsinnenraum befindliches Fluid auch mit geringem Vakuum entfernt werden kann. Falls ein zwischen dem zentralen Innenraum des Kompensators und dem Ausformungsinnenraum vorhandener Durchgang zu schmal ist, um eine entsprechende Rohrleitung hindurchzuführen, besteht auch die Möglichkeit, die Verbindungsleitung vom zentralen Innenraum des Kompensators her führend vor diesem Durchgang enden zu lassen. Die Verbindungsleitung ragt dann nicht in den Ausformungsinnenraum hinein, sondern endet vor dem Durchgang. Durch Anlegen eines entsprechenden Vakuums bzw. Unterdrucks ist aber auch so eine Entfernung von gasförmigen Fluiden möglich.

Soll eine Flüssigkeit aus dem Ausformungsinnenraum entfernt werden, weist die erfindungsgemäße Vorrichtung vorzugsweise eine Heizeinrichtung zum Verdampfen der in der Ausformung befindliche Flüssigkeit auf. Die verdampfte Flüssigkeit kann dann auch mithilfe einer vor dem Durchgang endenden Leitung entfernt werden. Bei der Heizeinrichtung handelt es sich vorzugsweise um eine elektrische Heizeinrichtung wie beispielsweise eine Heizmatte, die an der Außenseite der Ausformung angeordnet ist.

Die erfindungsgemäße Vorrichtung ist vorzugsweise derart gestaltet, dass (a) ein erster, innerer Teil der Verbindungsleitung durch eine Rohrleitung gebildet ist, die durch den zentralen Innenraum des Kompensators führt und bis zur oder bis in die Durchgangsöffnung reicht, und (b) ein zweiter, äußerer Teil der Verbindungsleitung, der zu der Absaugeinrichtung führt, über einen von außen an die Durchgangsöffnung angeschlossenen Stutzen mit dem ersten, inneren Teil der Verbindungsleitung in Strömungsverbindung gebracht werden kann. Im Betrieb des Kompensators ist der Stutzen vorzugsweise durch einen Blindflansch verschlossen. Soll der Kompensator außerhalb des Betriebs entleert werden, so wird an den Stutzen der zweite, äußere Teil der Verbindungsleitung, der zu Absaugeinrichtung führt, angeschlossen. Generell ist jedoch auch eine Gestaltung denkbar, bei der der innere Teil und der äußere Teil der Verbindungsleitung ständig in Verbindung stehen und über ein Ventil in der Verbindungsleitung eine Strömungsverbindung zwischen dem Ausformungsinnenraum und der Absaugeinrichtung hergestellt wird oder unterbunden wird. Dies kann ein handbetriebenes Ventil sein.

Vorzugsweise befindet sich die Durchgangsöffnung in einer Wand eines rohrförmigen Verbindungsteils, das mit dem Kompensator und mit dem vorgenannten ersten, inneren Teil der Verbindungsleitung, der durch den zentralen Innenraum des Kompensators führt und bis zur oder bis in die Durchgangsöffnung reicht, als vorgefertigte Einheit verbunden ist. Hierdurch ist die Montage der Entlüftungs- oder Entleerungsvorrichtung am Anlagenstandort vereinfacht. Das Verbindungsteil muss dann nur noch mit dem entsprechenden Anlagenbauteil, beispielsweise einem Mantelteil, verbunden werden und der innere Teil der Verbindungsleitung mit dem äußeren Teil der Verbindungsleitung verbunden und somit mit der Absaugeinrichtung in Strömungsverbindung gebracht werden.

Bei der erfindungsgemäßen Vorrichtung weist ein in dem zentralen Innenraum des Kompensators verlaufender erster Teil der Verbindungsleitung, vorzugsweise der vorgenannte erste, innere Teil der Verbindungsleitung, einen Durchmesser von weniger als 20 mm, vorzugsweise von weniger als 10 mm auf. Hierdurch besteht die Möglichkeit die erfindungsgemäße Vorrichtung auch für Apparate oder Maschinen zu verwenden, in deren Innenraum wenig Platz für die Verbindungsleitung vorhanden ist. Ein Beispiel hierfür ist der Mantelraum von Wärmeaustauschern mit einem geraden Rohrbündel, wo zwischen dem äußeren Rohrkreis und der Mantelinnenseite nur wenig Raum zur Verfügung steht.

Die erfindungsgemäße Enleerungs- oder Entlüftungsvorrichtung kann für alle Arten von Kompensatoren verwendet werden, die eine oder mehrere Ausformungen aufweisen, in denen sich während des Betriebs des Kompensators Fluide sammeln, die nicht allein durch Schwerkraft entleert werden können. Dies ist insbesondere bei einer waagrechten Anordnung eines Kompensators der Fall, wo zumindest ein Teil der Ausformung bzw. des Ausformungsinnenraums unterhalb eines niedrigsten bzw. oberhalb eines höchsten Wandungsabschnitts eines mit dem Kompensator verbundenen Bauteils liegt. Die erfindungemäße Vorrichtung ist vorzugsweise für Kompensatoren mit Wellen geeignet, bei denen die jeweilige Welle in Form eines Ringes um den im Wesentlichen rohrförmigen Körper des Kompensators umläuft, oder auch für Kompensatoren mit Wellen, die ebenfalls um einen im Wesentlichen rohrförmigen Körper des Kompensators umlaufen und einen im Wesentlichen kreisförmigen oder elliptischen Querschnitt aufweisen. Da diese Wellen große Welleninnenräume aufweisen können, können sich hier erhebliche Mengen an Fluiden sammeln, die nicht durch Schwerkraft entleert werden können. Vorzugsweise ist die erfindungsgemäße Vorrichtung für Kompensatoren gedacht, die eine Welle aus Metall, beispielsweise Edelstahl, mit einer Wandstärke im Bereich von etwa 0,5 bis 1,5 mm aufweisen. Bei diesen ist die Anordnung einer Entlüftungs- oder Entleerungseinrichtung an der Wellenwandung nicht möglich.

Große Vorteile bietet die erfindungsgemäße Vorrichtung für Wärmeaustauscher, beispielsweise Geradrohr-Wärmeaustauscher, bei denen der Kompensator Mantelteile des Wärmeaustauschers miteinander verbindet. Wie vorstehend erwähnt, ist in solchen Wärmeaustauschern im Mantelraum wenig Platz, da dort die Rohre nahe an den Mantel angrenzen und zwischen den Rohren der einzelnen Rohrkreise wenig Raum vorhanden ist. Der im zentralen Innenraum des Kompensators bzw. im Mantelraum des Wärmeaustauschers verlaufende Teil der Verbindungsleitung kann jedoch sehr dünn gestaltet sein, so dass dieser zwischen dem äußeren Rohrkreis und der Innenseite des Mantels ausreichend Platz findet. Mit der erfindungsgemäßen Vorrichtung können somit auch waagrecht aufgestellte Wärmeaustauscher vollständig restenleert werden, die aufgrund der großer Temperaturunterschiede zwischen dem im Mantelraum fließenden Medium und dem im Rohrraum fließenden Medium einen zwischen Mantelteilen angeordneten Kompensator benötigen.

Vorzugsweise wird die erfindungsgemäße Vorrichtung für einen Geradrohr-Wärmeaustauscher verwendet, der in einer Synthesegas- oder Wasserstoffanlage beispielsweise als Vorwärmer eingesetzt werden, in welchem ein Einsatzstoff, beispielsweise Wasser oder Erdgas, im indirekten Wärmeaustausch mit heißem Synthesegas vorgewärmt wird. Aufgrund der hohen Temperaturunterschiede zwischen dem Einsatzstoff, der durch den Mantelraum fließt, und dem heißen Synthesegas, das durch die Rohre fließt, ist ein Kompensator am Mantel notwendig. Dieser kann mithilfe der erfindungsgemäßen Vorrichtung vollständig, beispielsweise von Erdgas, restentleert werden, so dass Wartungsarbeiten, wie Schweißarbeiten, ohne Gefahr für das Wartungspersonal durchgeführt werden können.

Die erfindungsgemäße Vorrichtung kann auch für Schwimmkopf-Wärmeaustauscher mit einem geradem Rohrbündel, einem Schwimmkopf mit aufgesetztem Stutzen mit Kompensator verwendet werden, wie er in der Patentanmeldung "Wärmeaustauscher mit geradem Rohrbündel und Schwimmkopf' (Aktenzeichen der Anmelderin 102007017227.5) beschrieben ist.

Die Erfindung sowie weitere Einzelheiten der Erfindung werden im Folgenden anhand von in den Zeichnungen dargestellten Ausführungsbeispielen näher erläutert. Hierbei zeigt:
- Fig. 1: einen Geradrohr-Wärmeaustauscher mit einem zwischen Mantelteilen angeordneten Kompensator in Schnittansicht und einer Entlüftungsvorrichtung für den Kompensator;
- Fig. 2: eine vergrößerte Teilansicht des Kompensators und der Entlüftungsvorrichtung aus Fig. 1;
- Fig. 3: eine weitere Ausführungsform einer Entlüftungsvorrichtung für einen Kompensator in dergleichen Ansicht wie Fig. 2;
- Fig. 4: eine Entleerungsvorrichtung für einen Kompensator.

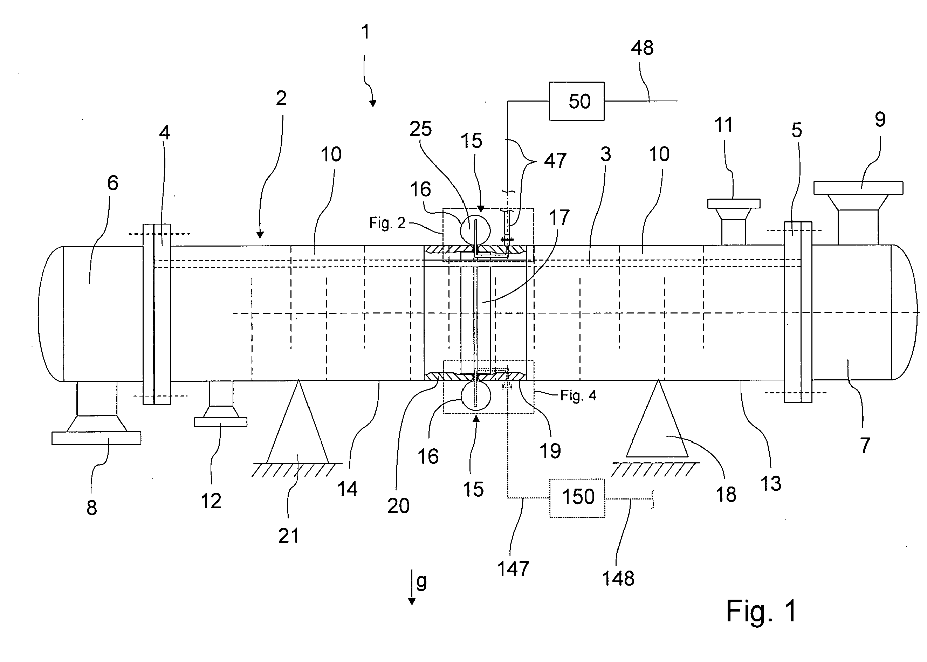

Fig. 1 zeigt eine Seitenansicht und teilweise Schnittansicht eines Geradrohr-Wärmeaustauschers 1. Der Wärmeaustauscher 1 umfasst einen Mantel 2 und ein Rohrbündel aus geraden, parallel zueinander angeordneten Rohren 3, wovon in der Figur nur ein einziges dargestellt ist. An ihren Enden sind die Rohre 3 jeweils in Rohrböden 4 und 5 gelagert. An die Rohrböden 4 und 5 sind jeweils über Flanschverbindungen Vorkammern 6 und 7 mit Stutzen 8, 9 angeschlossen, über die ein erstes Medium in die Rohre 3 eingespeist bzw. aus den Rohren 3 abgeführt werden kann. Die Rohrböden 4 und 5 und der Mantel 2 begrenzen einen Außenraum um die Rohre 3, der im Folgenden als Mantelraum 10 bezeichnet wird. Im Bereich des Mantelraums 10 befinden sich am Mantel 2 des Wärmeaustauschers 1 Stutzen 11 und 12 zur Einspeisung eines zweiten Mediums in den Mantelraum 10 bzw. zur Abführung des zweiten Mediums aus dem Mantelraum 10.

Im Bereich der Rohre 3 ist der Mantel 2 des Wärmeaustauschers 1 aus rohrförmigen Mantelteilen 13 und 14 gebildet, die über einen Kompensator 15 miteinander verbunden sind. Der Kompensator 15 ist einlagig und weist eine um den Umfang des Kompensators 15 umlaufende Ausformung bzw. Welle 16 auf. Der Kompensator 15 ist aus Edelstahl (Chrom-Nickel-Stahl) gebildet. Wie aus Fig. 1 zu ersehen, ist der Kompensator 15 nicht direkt an den Mantelteilen 13 und 14 befestigt, sondern jeweils über kurze, rohrförmige Verbindungsteile 19 und 20, die verstärkt ausgeführt sind. Die Verbindungsteile19 und 20 bilden selbst kurze Abschnitte des Mantels 2. Sie sind wie der Kompensator 15 aus Edelstahl (Chrom-Nickel-Stahl) gebildet, so dass diese auf einfache Weise durch Schweißen mit dem Kompensator 15 verbunden werden können. Die Verbindungsteile 19 und 20 ihrerseits sind durch Schweißnähte mit den beiden Mantelteilen 13 und 14 verbunden.

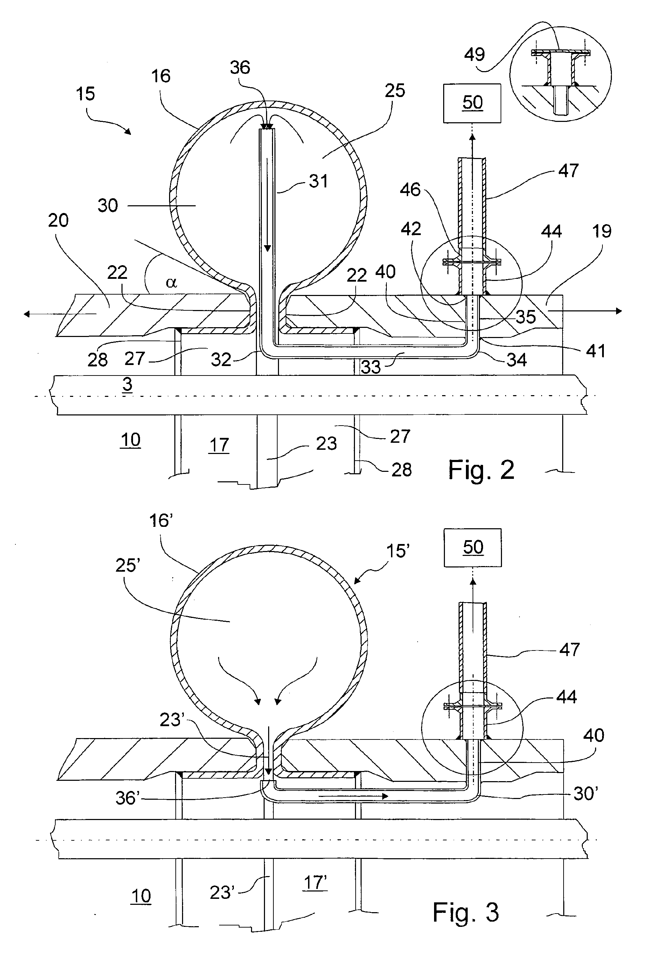

Fig. 2 zeigt eine vergrößerte Schnittansicht des Kompensators 15 mit benachbarten Bauteilen. Der in Fig. 2 dargestellte Ausschnitt ist in Fig. 1 in unterbrochenen Linien eingezeichnet. Der Kompensator 15 ist einlagig mit einer Wandstärke von weniger als 2 mm ausgebildet. Er weist eine um den Umfang umlaufende Welle 16 auf, die im Schnitt im Wesentlichen kreisförmig ausgebildet ist. Die Welle 16 schließt in mehreren Abschnitten mit den Außenwänden der Verbindungsteile 19 und 20 einen Außenwinkel α von weniger als 90° ein. Die Welle 16 kann jedoch abweichend vom vorliegenden Beispiel im Querschnitt im Wesentlichen auch als Kreissegment oder als Ellipse bzw.

Teilellipse ausgebildet sein. An die im Schnitt kreisförmige Welle 16 schließen sich abgewinkelte Abschnitte 22 an. Die abgewinkelten Abschnitte 22 umgreifen die dem Kompensator 15 zugewandten Enden der Verbindungssteile 19 und 20. Zwischen den abgewinkelten Abschnitten 22 des Kompensators 15 verbleibt ein um den Umfang umlaufender Spalt 23, der einen Durchgang von einem zentralen Innenraum 17 des Kompensators 15 zu einem von der Welle 16 umgrenzten Welleninnenraum 25 bildet. An die abgewinkelten Abschnitte 22 schließen sich beidseits rohrförmige Abschnitte 27 an. Der zentrale, zylinderförmige Innenraum 17 des Kompensators 15 erstreckt sich in diesem Beispiel von einem freien Ende 28 eines rohrförmigen Abschnitts 27 zum freien Ende 28 des anderen rohrförmigen Abschnitts 27 des Kompensators 15. Der zentrale Innenraum 17 des Kompensators 15 bildet einen Teil des Mantelraums 10 des Wärmeaustauschers 1. An den freien Enden 28 der rohrförmigen Abschnitte 27 ist der Kompensator 15 mit umlaufenden Schweißnähten an den jeweiligen von Fluid beaufschlagten Innenseiten der Verbindungsteile 19 und 20 befestigt.

Erfahren die Rohre 3 während des Betriebs des Wärmeaustauschers 1 von Fig. 1 aufgrund von Temperaturdifferenzen zwischen dem ersten und zweiten Medium eine andere Längsausdehnung als die Mantelteile 13 und 14, so kann der Kompensator 15 diese ausgleichen, in dem er sich in Längsrichtung der Rohre 3 ausdehnt. Die Verbindungsteile 19 und 20 entfernen sich in der in Fig. 2 eingezeichneten Pfeilrichtungen voneinander. Der Spalt 23 wird größer. Durch den dehnbaren Kompensator 15 wird die Entstehung großer mechanischer Spannungen im Wärmeaustauscher 1 verhindert. Um eine Längsausdehnung des Mantels 2 des Wärmeaustauschers 1 von Fig. 1 zu ermöglichen, ist ein Mantelteil 14 auf einem feststehenden Lager 21 gelagert, wohingegen das zweite Mantelteil 13 auf einem in Längsrichtung beweglichen Lager 18 gelagert ist.

Der in Fig. 1 dargestellte Wärmeaustauscher 1 kann beispielsweise als Einsatzstoff-Vorwärmer in einer Anlage zur Herstellung von Wasserstoff verwendet werden. Hierbei wird ein kalter Einsatzstoff, wie beispielsweise Erdgas, in indirekten Wärmeaustausch mit heißem Synthesegas (CO und H2) gebracht. Der kalte Einsatzstoff durchfließt den Mantelraum 10 und das heiße Synthesegas die Rohre 3 des Wärmeaustauschers 1. Hierbei können Temperaturunterschiede zwischen Einsatzstoff und Synthesegas von bis zu 300°C herrschen. Der Kompensator 15 dehnt sich und verhindert somit eine hohe Beanspruchung des Wärmeaustauschers 1 durch temperaturinduzierte Spannungen.

Wie aus Fig. 2 des Weiteren zu ersehen, ragt in den von der Welle 16 umgebenen Welleninnenraum 25 eine dünne Rohrleitung 30 hinein, die in geringem Abstand zur Innenseite der Welle 16 endet. Dieses freie Ende 36 der Rohrleitung 30 befindet sich, wie in Fig. 1 gezeigt, an höchstmöglicher Stelle innerhalb des Welleninnenraums 25. Die Rohrleitung 30 verläuft von dem Ende 36 aus in einem ersten geraden Abschnitt 31 innerhalb des Welleninnenraums 25 radial - in Bezug auf den Wärmeaustauscher 1-nach innen und durch den Spalt 23 hindurch in den zentralen Innenraum 17 des Kompensators 15, d.h. in den Mantelraum 10. Es folgt ein erster gebogener Abschnitt 32. In einem daran anschließenden zweiten geraden Abschnitt 33 verläuft die Rohrleitung 30 in axialer Richtung parallel zu den Rohren 3 in geringem Abstand zur Innenseite des Verbindungsteils 19. Es folgt ein zweiter gebogener Abschnitt 34 und daran anschließend ein dritter gerader Abschnitt 35, der radial nach außen verläuft und in eine Durchgangsöffnung (Bohrung) 40 im Verbindungsteil 19 eingeführt ist. Durch Schweißnähte 41 und 42 an der Innenseite und Außenseite des Verbindungsteils 19 ist die Rohrleitung 30 am Verbindungsteil 19 fixiert. Die Schweißnaht 41 verhindert, dass Fluid vom Mantelraum 10 in den Spalt zwischen der Rohrleitung 30 und der Durchgangsbohrung 40 gelangt und Spaltkorrosion hervorruft. Die Rohrleitung 30 ist aus einem Materialstück aus Edelstahl (Chrom-Nickel-Stahl) gefertigt. Sie besitzt einen Durchmesser von in diesem Beispiel von etwa 6 mm.

An der Außenseite des Verbindungsteils 19 ist im Bereich der Durchgangsbohrung 40 ein Rohrstutzen 44 angebracht, der sich koaxial an den geraden Abschnitt 35 der Rohrleitung 30 anschließt. Im Betrieb des Wärmeaustauschers 1 ist der Stutzen 44, wie in der umkreisten Detailansicht rechts oben in Fig. 2 gezeigt, mit einem Blindflansch 49 verschlossen.

Außerhalb des Betriebs des Wärmeaustauschers 1 ist an den Rohrstutzen 44 über einen Flansch 46 eine Rohrleitung 47 anschließbar. Die Rohrleitung 47 führt, wie auch in Fig. 1 gezeigt, zu einer Pumpe 50. Die Rohrleitung 30, die Durchgangsbohrung 40, der Stutzen 44, die Rohrleitung 47 mit Flanschanschlüssen sowie die Pumpe 50 bilden in vorliegendem Ausführungsbeispiel eine Entlüftungsvorrichtung für den Kompensator 15, was im Folgenden näher erläutert wird.

Während des Betriebs des Wärmeaustauschers 1 als Einsatzstoff-Vorwärmer in einer Wasserstoffanlage gelangt Erdgas, das durch den Mantelraum 10 geführt wird, durch den Spalt 23 in den Welleninnenraum 25. Da sich ein Teil des umlaufenden Welleninnenraums 25, wie in Fig. 1 gezeigt, oberhalb der Mantelteile 13, 14, 19 und 20 des waagrecht aufgestellten Wärmeaustauschers 1 befindet, verbleibt Erdgas, das leichter ist als Luft, nach einer Entlüftung des Mantelraums 10 in diesem Teil des Welleninnenraums 25.

Um die verbleibenden Reste des Erdgases aus dem Welleninnenraum 25 zu entfernen, wird an den in Fig. 2 gezeigten Stutzen 44 die Rohrleitung 47 angeschlossen und die Pumpe 50 zur Erzeugung eines geringen Vakuums eingeschaltet. Hierdurch wird das verbleibende Erdgas in die Rohrleitung 22 - veranschaulicht durch die eingezeichneten Pfeile - eingesaugt und über die an den Stutzen 44 angeschlossene Rohrleitung 47 aus dem Welleninnenraum 25 abgeführt. Das entfernte Erdgas wird über die in Fig. 1 gezeigte Leitung 48 ausgeblasen. Damit ist eine vollständige Restentleerung des Welleninnenraums 25 von brennbarem Erdgas möglich. Dies ermöglicht, alle Wartungsarbeiten am Wärmeaustauscher umfassend auch Schweißarbeiten ohne Gefahr für das Wartungspersonal durchzuführen.

Abweichend von der dargestellten Ausführungsform besteht auch die Möglichkeit, die Rohrleitung 47 dauerhaft an dem Stutzen 44 anzuschließen und mit einem Ventil zu versehen, das im Betrieb des Wärmeaustauschers 1 geschlossen ist und im Falle einer notwendigen Entlüftung des Kompensators 15 zur Verbindung mit der Pumpe 50 geöffnet wird. Weist ein Kompensator abweichend von der dargestellten Ausführungsform mehrere Wellen 16 auf, so ist jede Welle 16 mit einer entsprechenden Rohrleitung 30 zu versehen und eine entsprechende Anzahl von Durchgangsbohrungen 40 und Stutzen 44 am Mantel des Wärmeaustauschers 1 vorzusehen. Die jeweiligen Stutzen 44 können dabei über den Umfang verteilt auf gleicher axialer Höhe am Verbindungsteil 19 oder 20 oder auch an den Mantelteilen 13 und 14 des Wärmeaustauschers 1 angeordnet sein.

Fig.3 zeigt eine alternative Ausführungsform einer Entlüftungsvorrichtung für einen Kompensator 15'. Dabei zeigt Fig. 3 denselben Ausschnitt an einem Wärmeaustauscher 1 wie Fig. 2. Im Vergleich zu dem Kompensator 15 von Fig. 2 weist der in Fig. 3 gezeigte Kompensator 15' einen schmaleren Durchgang bzw. Spalt 23' zwischen dem zentralen Innenraum 17' des Kompensators 15' und dem Welleninnenraum 25' auf. In diesem Beispiel endet die Rohrleitung 30' mit ihrem freien Ende 36' kurz vor dem Spalt 23. Sie ragt im Vergleich zu Fig. 2 nicht in den Welleninnenraum 25' hinein.

Zur Entlüftung wird auch hier mithilfe der Pumpe 50 ein Vakuum erzeugt, die Reste des ersten Mediums, hier Erdgas, aus dem Welleninnenraum 25' absaugt. Um eine seitliches Einströmen von Luft aus dem zentralen Innenraum 17' des Kompensators 15' in die Rohrleitung 30' zu vermindern, sollte sich das Leitungsende 36' möglichst nah am Spalt 23' befinden. Zudem ist es möglich, das Ende 36' als Düse mit langgestrecktem Spalt auszubilden, was jedoch nicht dargestellt ist.

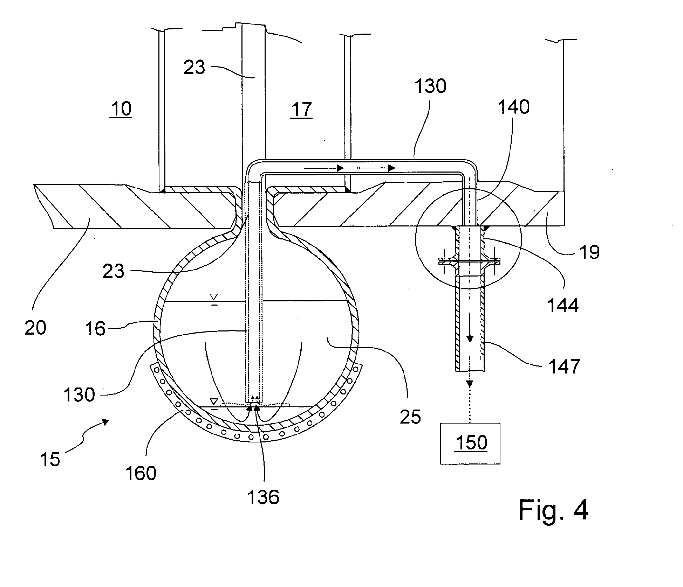

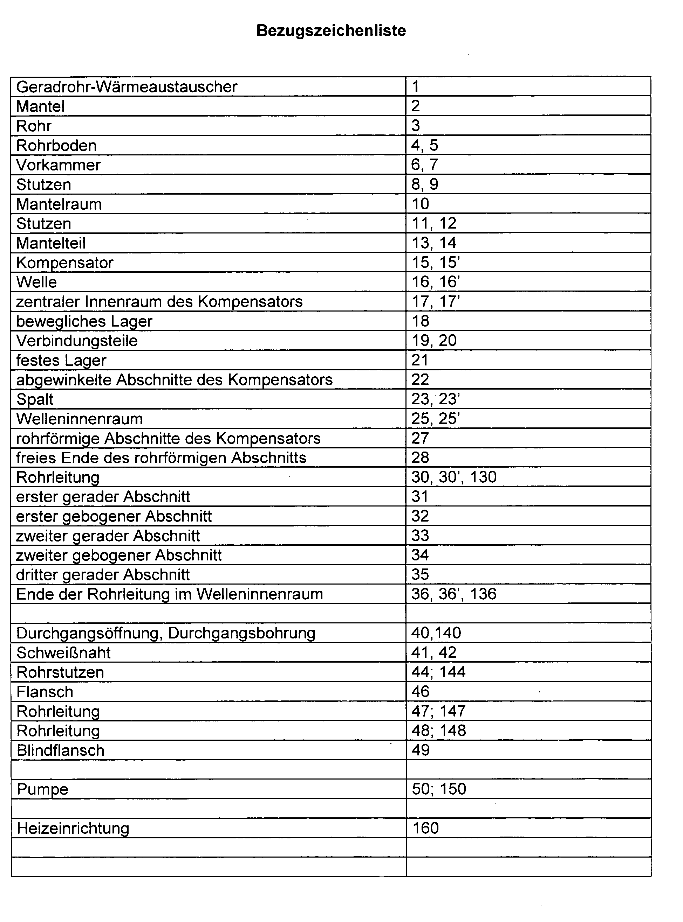

In Bezug auf Fig. 4 wird nun angenommen, dass durch den Mantelraum 10 des Wärmeaustauschers 1 nicht, wie in Bezug auf Fig. 2 und 3 beschrieben, ein gasförmiges Medium, sondern ein flüssiges Medium geleitetet wird. Ein Beispiel hierfür ist die Verwendung des Wärmeaustauschers 1 als Wasser-Vorwärmer in einer Wasserstoff- oder Synthesegasanlage. In dieser Anwendung wird heißes Synthesegas mit einer Temperatur von 450°C durch die Rohre 3 des Wärmeaustauschers 1 geleitet. Im Gegenstrom wird hierzu durch den Mantelraum 10 des Wärmeaustauschers kaltes Wasser geleitet. Das Wasser wird dabei erwärmt und das Synthesegas um etwa 150°C abgekühlt.

Fig. 4 zeigt einen Ausschnitt des in Fig. 1 gezeigten Wärmeaustauscher 1 mit dem Kompensator 15 in einem unteren Bereich des Mantels 2. Der dargestellte Ausschnitt ist in Fig. 1 in gepunkteten Linien eingezeichnet. In diesem Bereich umfasst der Wärmeaustauscher 1 eine Entleerungsvorrichtung zur Restentleerung des Welleninnenraums 25 von dem flüssigen Medium, hier Wasser.

Die in Fig. 1 und Fig. 4 gezeigte Entleerungsvorrichtung umfasst die gleichen Bauteile wie die Entlüftungsvorrichtung von Fig. 2. Diese sind jedoch in Bezug auf eine durch die Längsachse des Wärmeaustauschers 1 führende waagrechte Ebene gespiegelt zu denjenigen der Entlüftungsvorrichtung von Fig. 2 ausgeführt und angeordnet. In ihrer Bezugsziffer sind die Teile um 100 gegenüber denjenigen von Fig. 2 erhöht. Das freie Ende 136 der Rohrleitung 130 befindet sich hier an der tiefstmöglichen Stelle innerhalb des Welleninnenraums 25, sofern die Rohrleitung 130, wie in gepunkteten Linien dargestellt, in den Welleninnenraum 25 hineinragt. Zusätzlich umfasst die Entleerungsvorrichtung eine elektrische Heizeinrichtung 160 mithilfe derer das in dem Welleninnenraum 25 befindliche flüssige Medium verdampft werden kann. Die Heizeinrichtung 160 kann beispielsweise durch eine elektrische Heizmatte gebildet sein.

Im Betrieb des Wärmeaustauschers 1 strömt Wasser vom Mantelraum 10 durch den Spalt 23 in den Welleninnenraum 25 ein. In einem Bereich des Welleninnenraums 25, der wie in Fig. 1 gezeigt, unterhalb des niedrigsten Niveaus des Mantels 2 liegt, verbleibt nach einer Entleerung des Mantelraums 10 ein Rest Wasser, der nicht durch Schwerkraft entfernt werden kann. Um diesen Rest zu entfernen, wird die Pumpe 150 eingeschaltet. Diese erzeugt einen Unterdruck, wodurch das Wasser veranschaulicht durch die eingezeichneten Pfeile durch die Rohrleitungen 130 und 147 abgeführt wird.

Ein Rest an flüssigem Fluid, das unterhalb des unteren Endes 136 der Rohrleitung 130 im Welleninnenraum 25 verbleibt, wird mithilfe der Heizeinrichtung 160 verdampft. Der Dampf wird ebenfalls über die Rohrleitung 130 und die Pumpe 150 abgesaugt.

Wie in Fig. 4 eingezeichnet, kann die Rohrleitung 130 auch kurz oberhalb des Spaltes 23 enden, falls diese nicht in den Welleninnenraum 25 eingeführt werden kann. Das in dem Welleninnenraum 25 befindliche Fluid wird in diesem Fall mithilfe der Heizeinrichtung 160 verdampft und über die verkürzte Leitung 130 abgesaugt.

Eine Entlüftungsvorrichtung wie in Bezug auf Fig. 2 und 3 erläutert wird bei einer Verwendung des Wärmeaustauschers 1 als Wasser-Vorwärmer nicht benötigt, kann aber vorhanden sein, falls der Wärmeaustauscher 1 sowohl für ein gasförmiges als auch für ein flüssiges Medium im Mantelraum 10 ausgestaltet sein soll.

## Patentansprüche

1. Entleerungs- oder Entlüftungsvorrichtung für einen Kompensator (15; 15'), der einen zentralen, insbesondere zylindrischen, Innenraum (17; 17') und zumindest eine umlaufende Ausformung (16; 16'), insbesondere eine Welle (16; 16'), aufweist, die einen Ausformungsinnenraum (25; 25') umgibt, wobei die Entleerungs- oder Entlüftungsvorrichtung aufweist: eine Absaugeinrichtung (50; 150) zum Absaugen eines Fluids aus dem Ausformungsinnenraum (25; 25') sowie eine Verbindungsleitung (30, 47; 30', 47; 130, 147), die eine Strömungsverbindung zwischen dem Ausformungsinnenraum (25; 25') und der Absaugeinrichtung (50; 150) herstellt, wobei die Verbindungsleitung (30, 47; 30', 47; 130, 147) durch den zentralen Innenraum (17; 17') des Kompensators (15; 15') verläuft und durch eine Durchgangsöffnung (40; 140), insbesondere eine Durchgangsbohrung (40; 140), in einer Wand eines mit dem Kompensator (15, 15') verbundenen Bauteils (19) führt.

2. Vorrichtung nach Anspruch 1, **dadurch gekennzeichnet, dass** die Absaugeinrichtung (50; 150) eine elektrisch betriebene Pumpe (50; 150) umfasst.

3. Vorrichtung nach Anspruch 1 oder 2, **dadurch gekennzeichnet, dass** die Verbindungsleitung (30, 47; 30', 47; 130, 147) in den Ausformungsinnenraum (25; 25') des Kompensators (15; 15') hineinragt.

4. Vorrichtung nach einem der vorangehenden Ansprüche, **dadurch gekennzeichnet, dass** die Verbindungsleitung (30, 47; 30', 47; 130, 147) vom zentralen Innenraum (17; 17') des Kompensators (15; 15') her führend vor einem Durchgang (23; 23') endet, der den zentralen Innenraum (17; 17') des Kompensators (15; 15') mit dem Ausformungsinnenraum (25; 25') verbindet.

5. Vorrichtung nach einem der vorangehenden Ansprüche, **gekennzeichnet durch** eine Heizeinrichtung (160) zum Verdampfen einer in der Ausformung (16; 16') befindlichen Flüssigkeit.

6. Vorrichtung nach einem der vorangehenden Ansprüche, **dadurch gekennzeichnet, dass**
(a) ein erster, innerer Teil (30; 30') der Verbindungsleitung (30, 47; 30', 47; 130, 147) durch eine Rohrleitung (30; 30', 130) gebildet ist, die durch den zentralen Innenraum (17) des Kompensators (15; 15') führt und bis zur oder bis in die Durchgangsöffnung (40; 140) reicht, und
(b) ein zweiter, äußerer Teil (47; 147) der Verbindungsleitung (30, 47; 30', 47; 130, 147), der zu der Absaugeinrichtung (50; 150) führt, über einen von außen an die Durchgangsöffnung (40; 140) angeschlossenen Stutzen (44, 144) mit dem ersten, inneren Teil (30; 30') der Verbindungsleitung (30, 47; 30', 47; 130, 147) in Strömungsverbindung gebracht werden kann.

7. Vorrichtung nach einem der vorangehenden Ansprüche, **dadurch gekennzeichnet, dass** sich die Durchgangsöffnung (40; 140) in einer Wand eines rohrförmigen Verbindungsteils (19) befindet, das mit dem Kompensator (15, 15') und mit einem inneren Teil (30; 30'; 130) der Verbindungsleitung (30, 47; 30', 47; 130, 147), der durch den zentralen Innenraum (17) des Kompensators (15, 15') führt und bis zur oder bis in die Durchgangsöffnung (40; 140) reicht, als vorgefertigte Einheit verbunden ist.

8. Vorrichtung nach Anspruch 7, **dadurch gekennzeichnet, dass** im Betrieb des Kompensators (15; 15') der Stutzen (44; 144) durch einen Blindflansch (49) verschlossen ist.

9. Vorrichtung nach einem der vorangehenden Ansprüche, **dadurch gekennzeichnet, dass** ein erster Teil (30; 30', 130) der Verbindungsleitung (30, 47; 30', 47; 130, 147), der in dem zentralen Innenraum (17) des Kompensators (15; 15') verläuft, einen Durchmesser von weniger als 20 mm, insbesondere von weniger als 10 mm, aufweist.

10. Wärmeaustauscher (1), insbesondere Geradrohr-Wärmeaustauscher (1), mit einem Kompensator (15; 15') mit zumindest einer Ausformung (16, 16'), wobei der Kompensator (15; 15') Mantelteile (19, 20) des Wärmeaustauschers miteinander verbindet, sowie einer Entleerungs- und/oder Entlüftungsvorrichtung für den Kompensator (15; 15') nach einem der vorangehenden Ansprüche.

11. Verwendung eines Geradrohr-Wärmeaustauschers (1) nach Anspruch 10 in einer Synthesegas- oder Wasserstoffanlage, insbesondere als Vorwärmer, in welchem ein Einsatzstoff, insbesondere Wasser oder Erdgas, im indirekten Wärmeaustausch mit heißem Synthesegas vorgewärmt wird.
